# EUROPEAN PATENT SPECIFICATION

(11) **EP 2 897 030 B1**
(45) Date of publication and mention of the grant of the patent: **25.04.2018**
(21) Application number: 14195041.0
(22) Date of filing: 27.11.2014
(51) Int. Cl.: H04B 5/00, H04W 4/00, H04W 84/18

(54) **Touch panel devices, electronic devices, and virtual input methods thereof**
Berührungsbildschirmvorrichtungen, elektronische Vorrichtungen und virtuelle Eingabeverfahren dafür
Dispositifs de panneau tactile, dispositifs électroniques et leurs procédés d'entrée virtuelle

(30) Priority: 15.01.2014 US 201461927761 P; 31.10.2014 US 201414529484
(43) Date of publication of application: 22.07.2015
(73) Proprietor: MediaTek Inc., Hsin-Chu 300 (TW)
(72) Inventor: Lai, Chao-Jung, 806 Kaohsiung City (TW)
(74) Representative: Goddar, Heinz J.

(56) References cited:
- CN-A- 102 916 729
- US-A1- 2011 304 583
- US-A1- 2013 147 760
- US-A1- 2013 169 571
- US-A1- 2013 231 046

## Description

### CROSS REFERENCE TO RELATED APPLICATIONS

This Application claims priority of U.S. Provisional Application No. 61/927,761, filed on January 15, 2014.

### BACKGROUND OF THE INVENTION

### Field of the Invention

The invention generally relates to virtual input techniques, and more particularly, to virtual input across two touch-sensitive devices using the touch link technology.

### Description of the Related Art

Along with the development of touch-sense technology, touch-controlled panel devices have become more and more popular. In an application of touch-sense technology, a touch-controlled panel device can detect and respond to contacts of a user. Besides the touch-sense technology, there is a recently developed "touch link technology" for a touch-controlled panel device, such as that recited in patent applications US 2011/0304583, US 2013/0147760, US 2013/0231046 A1, and CN 102916729A, which implements near field wireless communication by trying to utilize the existing touch-controlled panel and the corresponding hardware devices. Generally, a touch-controlled panel device includes a touch panel, a signal processing circuit and a central processing unit (CPU). For example, the touch-controlled panel device may be a touch pad without display function or a touch screen with display
function. The touch-controlled panel device may include a touch sensor. The touch sensor includes a plurality of driving electrodes and a plurality of sensing electrodes on a substrate. The touch-controlled panel device is usually implemented with Indium Tin Oxide (ITO) materials. The signal processing circuit is usually implemented by integrated circuit (IC). The signal processing circuit provides two main functions. One is performing analog to digital conversion, demodulation, or other signal processing procedures on the analog signals received from the touch panel, and then transmitting the processed signals to the CPU. Another is receiving digital signals from the CPU, performing modulation, digital to analog conversion, or other signal processing procedures on the received digital signals and then transmitting the processed signals to the touch panel. In an application of touch-sense technology, when user touches the touch-controlled panel device by his finger or a stylus, corresponding analog signals are generated by touching the driving electrodes and sensing electrodes via the touch sensor. The signals are transmitted to the CPU after being processed by the signal processing circuit. The CPU calculates the position where the user touches via proper algorithm(s) and responses to the contacts of the user. In the application of touch link technology, at least one of the driving electrode and the sensing electrode can act as a transmitting electrode for transmitting signals, and at least one of the driving electrode and the sensing electrode can act as a receiving electrode for receiving signals. When transmitting signals, a touch-controlled panel device can modulate and process the signal to be transmitted by the signal processing circuit, and transmit the processed signals to another touch-controlled panel device via the transmitting electrode by electric field coupling. The receiving electrode of the another touch-controlled panel device receives the transmitted signal. When receiving signals, a touch-controlled panel device can receive a signal via the receiving electrode by electric field coupling, demodulate the signals by the signal processing circuit, and then transmit the processed signal to the processer for further processing. Therefore, the signals can be transmitted and received by using the original electrodes to realize touch transmission based on electric fields without an inductive card reader or components with a similar function being incorporated. Compared to the conventional NFC technology, the touch link technology reduces both volume and cost. This is because some of the existing hardware may be reused. For system developers, the additional effort may be some software and/or firmware revision and porting so as to enable the existing hardware support touch link technology. For example, a protocol may be needed when using touch link technology to transmit and/or receive data; the software may be modified to implement the protocol. Of course, touch link technology also works when not using the existing hardware such as the existing touch-controlled panel device, but when using another touch-controlled panel and the signal processing circuit to realize touch link technology. In addition, in an application of the touch sense technology, there are two common types of touch-controlled panel device, including the capacitive touch and resistive touch. For the applications of touch link technology, besides the capacitive type of touch-controlled panel device, the resistive type of touch-controlled panel device can also be used to realize the touch link technology.

Switches, keyboards, and mouse devices which comprise one or more physical switches, keys, and/or buttons are the most commonly used input means for users to interact with electronic devices. With a switch, only limited control with regard to the movement of a cursor and making selections is provided. With a mouse, the movement of the input pointer corresponds to the relative movements of the mouse as the user moves the mouse along a surface. With a keyboard, combinations of a plurality of keys correspond to various selections of inputs, including enter, delete, and number, etc. Although these input methods work well, beginners are required to learn the operations thereof before they can interact with electronic devices. Not to mention that such means of input may not be as intuitive to use as many users would like. Also, due to the fact that such input methods generally occupy quite considerable space and are disposed externally to the electronic devices, they disadvantageously lack portability and are easily impaired.

In addition to the physical input means, more and more consumer electronic devices, such as handheld gaming consoles, electronic-book (E-book) readers, smartphones, portable media players, tablet computers, and netbooks, employ touch pads and/or touch panels as input devices due to the growing demand for ubiquitous computing and networking. With a touch pad or touch panel, the movement of an input pointer (i.e., cursor) corresponds to the relative movements of the user's finger (or stylus) as the finger is moved along a surface of the touch pad or touch panel. A touch pad or a touch panel can also be used to make a selection on the display when one or more taps are detected on the surface of the touch pad or touch panel. Advantageously, touch pads or touch panels provide a more intuitive way for the user to interact with consumer electronic devices. Also, due to the fact that the touch-based input methods are generally incorporated into the consumer electronic devices, the problem of taking up extra space does not exist. However, either with the physical input means or the touch-based input means, user interaction is limited to the electronic devices which the physical or touch-based input means are coupled to or incorporated in.

Thus, it is desirable to have a virtual input method which can provide operational flexibility across electronic devices with efficient space occupancy.

### BRIEF SUMMARY OF THE INVENTION

The present invention provides a touch panel device according to claim 1, an input method according to claim 5, a computing system according to claim 9, and an input method according to claim 13. Embodiments of the invention are defined in the dependent claims.

In a first aspect of the invention, a touch panel device comprising a touch panel, a processing circuit, and a first conductive unit is provided. The touch panel is configured to detect a touch event. The processing circuit is configured to provide an electrical signal according to the touch event. The first conductive unit is configured to transmit the electrical signal to a second conductive unit of a computing device when the first conductive unit is in proximity with the second conductive unit.

In a second aspect of the invention, a virtual input method executed by a touch panel device comprising a touch panel, a processing circuit, and a first conductive unit is provided. The virtual input method comprises the steps of: detecting, at the touch panel, a touch event; generating, at the processing circuit, an electrical signal according to the touch event; and transmitting, at the first conductive unit, the electrical signal to a second conductive unit of a computing device when the first conductive unit is in proximity with the second conductive unit.

In a third aspect of the invention, a computing device comprising a first conductive unit, a processing circuit, and a processor is provided. The first conductive unit is configured to receive an electrical signal from a second conductive unit of a touch panel device when the first conductive unit is in proximity with the second conductive unit. The processing circuit is configured to process the electrical signal to provide a digital signal. The processor is configured to execute a plurality of instructions according to the digital signal.

In a fourth aspect of the invention, a virtual input method executed by a computing device comprising a first conductive unit, a processing circuit, and a processor is provided. The virtual input method comprises the steps of: receiving, at the first conductive unit, an electrical signal from a second conductive unit of a touch panel device when the first conductive unit is in proximity with the second conductive unit; processing, at the processing circuit, the electrical signal to provide a digital signal; and executing, at the processor, a plurality of instructions according to the digital signal.

While the first and second aspect relate to the generation and transmittal of an electrical signal, the third and fourth aspect relate to the receipt and processing of an electrical signal. The different aspects described herein can be combined in a single device or can be provided in separate devices. A touch panel device hence may include the components and functionalities described in the first aspect or in the first and third aspects. Further, the methods according to the second and fourth aspect may be implemented either individually or in combination in respective devices. Other aspects and features of the present invention will become apparent to those with ordinary skill in the art upon review of the following descriptions of specific embodiments of the virtual input methods, and touch panel devices and computing devices using the same.

### BRIEF DESCRIPTION OF DRAWINGS

The invention can be more fully understood by reading the subsequent detailed description and examples with references made to the accompanying drawings, wherein:
Fig. 1 is a schematic diagram of a virtual input system according to an embodiment of the invention;
Fig. 2 is a block diagram illustrating the functional units of the touch panel device 110 according to an embodiment of the invention;
Fig. 3 is a block diagram illustrating the functional units of the computing device 120 according to an embodiment of the invention;
Fig. 4 is a flow chart of the virtual input method according to an embodiment of the invention;
Fig. 5 is a schematic diagram of the touch panel device 110 providing a virtual key pad of a remote controller and the computing device 120 comprising an IR transmitter 500 for transmitting IR signals;
Fig. 6 is a schematic diagram of the touch panel device 110 providing a virtual key pad of a scientific calculator and the computing device 120 comprising a display screen 600 for outputting the calculation result;
Fig. 7 is a schematic diagram of the touch panel device 110 providing a virtual key pad of a lock unit 700 coupled to the computing device 120 for securing access there through; and
Fig. 8 is a schematic diagram of the touch panel device 110 providing a virtual selection menu and the computing device 120 comprising a wireless communication unit for providing wireless communication with the touch panel device 110.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

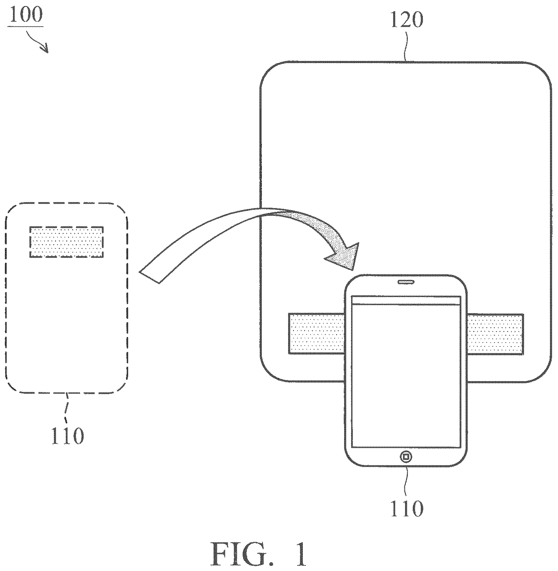

Fig. 1 is a schematic diagram of a virtual input system according to an embodiment of the invention. The virtual input system 100 comprises a touch panel device 110 and a computing device 120, wherein the touch panel device 110 may be a mobile phone, a smartphone, a Portable Media Player (PMP), a handheld gaming console, or a smart accessory (e.g., smart watch or smart glasses), and the computing device 120 may be a desktop computer, an All-In-One (AIO) computer, an Automatic Teller Machine (ATM), an information kiosk, a panel Personal Computer (PC), a tablet computer, or a notebook. Both the touch panel device 110 and the computing device 120 are equipped with a respective conductive unit which is capable of providing communication there between using the touch link technology. Specifically, when the two conductive units are in proximity with each other (e.g., the two conductive units approach each other or are in physical contact with each other), the conductive unit of the touch panel device 110 can be configured to serve as an input unit of the computing device 120. In other words, the computing device 120 adopts the conductive unit of the touch panel device 110 as an input interface when the two conductive units are in proximity with each other.

As shown in Fig. 1, the touch panel device 110 is equipped with a touch panel at its front surface and a conductive unit (denoted in gray) at its back surface, while the computing device 120 is equipped with a conductive unit (denoted in gray) at a particular part of its front surface. The touch panel device 110 is moved to the computing device 120 in a way that the back surface of the touch panel device 110 faces the front surface of the computing device 120, so that the two conductive units are in proximity with each other. Due to proximity between the two conductive units (including a physical contact or a close distance there between), the user input data on the touch panel of the touch panel device 110 may be sent in the form of an electrical signal to the computing device 120 and the computing device 120 may process the electrical signal which comprises the user input data for subsequent uses. Please note that the size of the computing device 120 is merely illustrated as a schematic example, and the invention cannot be limited thereto.

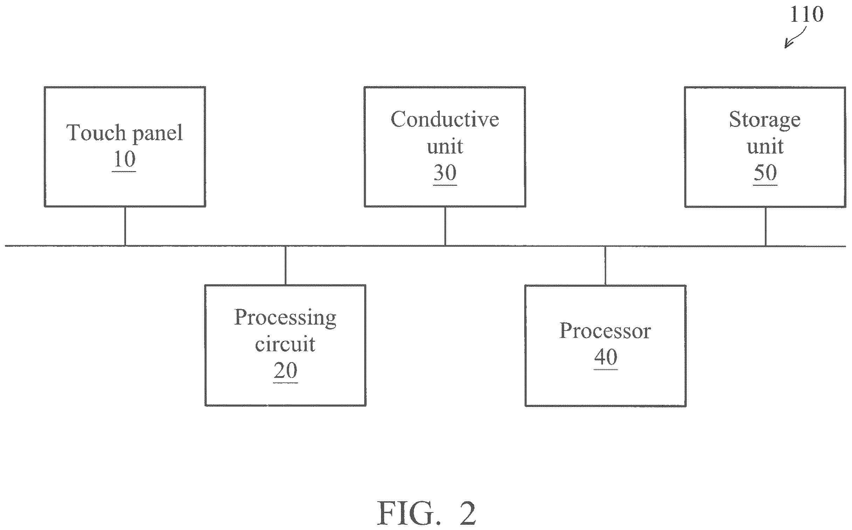

Fig. 2 is a block diagram illustrating the functional units of the touch panel device 110 according to an embodiment of the invention. The touch panel device 110 comprises a touch panel 10, a processing circuit 20, a conductive unit 30, a processor 40, and a storage unit 50. The touch panel 10 may include a display device, such as a Liquid-Crystal Display (LCD), a Light-Emitting Diode (LED), or an Electronic Paper Display (EPD), for providing the display function. With the display function and the touch-detection function, the touch panel 10 may provide a Graphical User Interface (GUI) for users to interact with the touch panel device 110, and also provide an input interface associated with the computing device 120 for receiving user input data when the touch panel 10 serves as an input unit of the computing device 120.

The processing circuit 20 may include analog circuits and digital circuits, implemented by discrete components or integrated circuits (IC), which provides the functions of analog/digital signal processing, including Analog-to-Digital Conversion (ADC), Digital-to-Analog Conversion (DAC), and analog signal filtering/amplifying, etc. For instance, the processing circuit 20 is responsible for generating an electrical signal according to the touch event detected at the touch panel 10. In one embodiment, when the touch panel 10 senses a touch event, an analog signal is generated; this analog signal is then processed by the processing circuit 20 through analog filtering, analog amplification and ADC to provide the electrical signal. The electrical signal may be further converted to analog domain by a DAC before sending to the conductive unit 30 described below.

The conductive unit 30 is capable of providing communication with another conductive unit using the touch link technology. To be more specific about the touch link technology, the conductive unit 30 comprises one or more transmitting electrodes and receiving electrodes for transmitting electrical signals and receiving specific data to and from another conductive unit through electromagnetic coupling, wherein the electrical signals and the specific data may be transmitted and received in one or several predetermined frequencies. That is, the touch panel device 110 may exchange data with the computing device 120 via the transmitting electrode(s) and receiving electrode(s) of the conductive unit 30, when the conductive unit 30 and the conductive unit of the computing device 120 are in proximity with each other. In addition to providing the communication, the transmitting electrodes and receiving electrodes of the conductive unit 30 are capable of detecting proximity of conductive objects according to the changes between the transmitted and received signals. In one embodiment, the conductive unit 30 may be a touch pad.

The processor 40 may be a general-purpose processor, a Micro-Control Unit (MCU), a Digital Signal Processor (DSP), or another type of processor, which provides the function of data/signal computing by executing a predetermined instruction sets. More particularly, the processor 40 may load and execute a series of instructions and/or program codes from the storage unit 50 to control the operation of the touch panel 10, the processing circuit 20, and the conductive unit 30, and to perform the virtual input method of the invention, including executing an application program for displaying a GUI associated with the computing device 120 on the touch panel 10 when the specific data received from the computing device 120 via the conductive unit 20 corresponds to the application program.

The storage unit 50 may be a non-volatile storage medium (e.g., Read-Only Memory (ROM), Flash memory, magnetic tape, hard disk, or optical disc), or a volatile storage medium (e.g., Random Access Memory (RAM)), or any combination thereof for storing data, such as instructions, program codes, and input data from users.

Although not shown, the touch panel device 110 may further comprise other functional units, such as a Radio Frequency (RF) unit and a Baseband unit for wireless communication, and/or an Input/Output (I/O) device, e.g., button, keyboard, mouse, or touch pad, etc., and the invention is not limited thereto. For example, if the touch panel device 110 is a mobile/smart phone, the Baseband unit therein may contain multiple hardware devices to perform baseband signal processing, including ADC/DAC, gain adjusting, modulation/demodulation, encoding/decoding, and so on, while the RF unit therein may receive RF wireless signals, convert the received RF wireless signals to baseband signals, which are processed by the Baseband unit, or receive baseband signals from the baseband unit and convert the received baseband signals to RF wireless signals, which are transmitted later. The RF unit may also contain multiple hardware devices to perform radio frequency conversion, such as a mixer for multiplying the baseband signals with a carrier oscillated in the radio frequency of the wireless communication system, wherein the radio frequency may be 900MHz, 1800MHz or 1900MHz utilized in the Global System for Mobile communications (GSM), or may be 900MHz, 1900MHz or 2100MHz utilized in the Wideband Code Division Multiple Access (WCDMA) systems, or may be 900MHz, 2100MHz, or 2.6GHz utilized in the Long Term Evolution (LTE)/LTE-Advanced technology, or others depending on the Radio Access Technology (RAT) in use. Alternatively, the radio frequency may be 2.4GHz or 5GHz utilized in the Wireless-Fidelity (WiFi) technology, or may be 2.4GHz utilized in the Bluetooth technology, and the invention cannot be limited thereto.

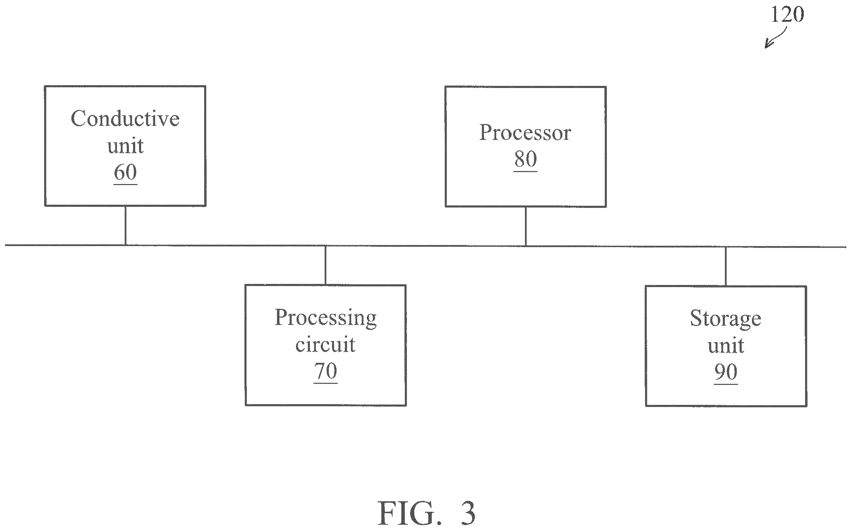

Fig. 3 is a block diagram illustrating the functional units of the computing device 120 according to an embodiment of the invention. The computing device 120 comprises a conductive unit 60, a processing circuit 70, a processor 80, and a storage unit 90.

Similar to the conductive unit 30, the conductive unit 60 is capable of providing communication with another conductive unit using the touch link technology. Specifically, the conductive unit 60 may comprise one or more transmitting electrodes and receiving electrodes for transmitting specific data and receiving electrical signals to and from another conductive unit, e.g., the conductive unit 30, through electromagnetic coupling, wherein the specific data and the electrical signals may be transmitted and received in one or several predetermined frequencies. That is, the computing device 120 may exchange data with the touch panel device 110 via the transmitting electrode(s) and receiving electrode(s) of the conductive unit 60, when the conductive units 30 and 60 are in proximity with each other. In one embodiment, with the communication provided by the conductive units 30 and 60, the computing device 120 may adopt the touch panel 10 as an input unit, i.e., the electrical data comprising the user input data received on the touch panel 10 may be transmitted to the computing device 120 via the conductive units 30 and 60. In addition to providing the communication, the transmitting electrodes and receiving electrodes of the conductive unit 60 are capable of detecting proximity of conductive objects according the changes between the transmitted and received signals. In one embodiment, the conductive unit 60 may be a touch pad.

The processing circuit 70 may include analog circuits and digital circuits, implemented by discrete components or integrated circuits (IC), which provides the function of data/signal processing and computing, including ADC, DAC, and signal filtering/amplifying, etc. Specifically, the processing circuit 70 is responsible for processing the electrical signal received from the touch panel device 110 to provide a digital signal.

The processor 80 may be a general-purpose processor, an MCU, a DSP, or another type of processor, which provides the function of data/signal computing with a predetermined instruction set. More particularly, the processor 80 may load and execute a plurality of instructions and/or program codes from the storage unit 90 to control the operation of the conductive unit 60 and the processing circuit 70, and to perform the virtual input method of the invention, including determining whether the digital signal provided from the processing circuit 60 meets a predefined criterion, and executing specific instructions according to the digital signal when the digital signal meets the predefined criterion. Specifically, the predefined criterion may specify that the digital signal should comply with a certain protocol or contain a certain header or sync bytes, which is/are accorded between the touch panel device 110 and the computing device 120. That is, if the digital signal meets the predefined criterion, the processor 80 may determine that the digital signal is valid and further perform the instruction execution according to the digital signal. Otherwise, if the digital signal does not meet the predefined criterion, the processor 80 may determine that the digital signal is invalid and not perform the instruction execution with the digital signal.

The storage unit 90 may be a non-volatile storage medium (e.g., ROM, Flash memory, magnetic tape, hard disk, or optical disc), or a volatile storage medium (e.g., RAM), or any combination thereof for storing data, such as instructions, program codes, and user input data received from the touch panel device 110.

Although not shown, the computing device 120 may further comprise other functional units, such as a display device for displaying a video or an image according to the digital signal, an Infrared (IR) transmitter for transmitting IR signals to control a remote display device according to the digital signal, a lock unit operative to be locked or unlocked according to the digital signal, and/or a wireless communication unit (e.g., a Bluetooth module or a WiFi module) for transmitting the digital signal to the touch panel device 110.

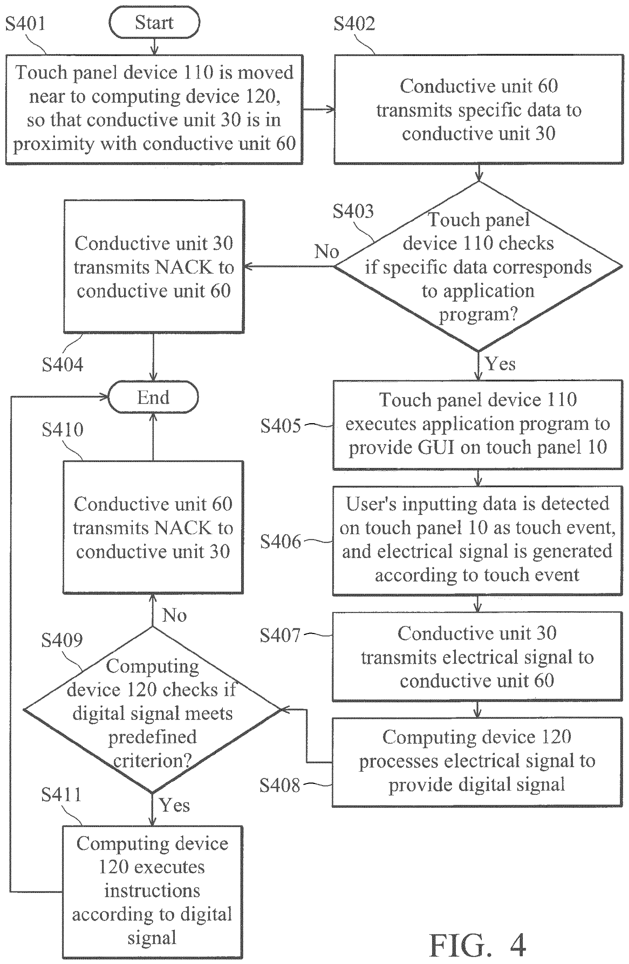

Fig. 4 is a flow chart of the virtual input method according to an embodiment of the invention. In this embodiment, the virtual input method is applied to the virtual input system 100 which includes the touch panel device 110 and the computing device 120, wherein each of the touch panel device 110 and the computing device 120 comprises a conductive unit, i.e., the conductive units 30 and 60. To begin with, the touch panel device 110 is moved near to the computing device 120, so that the conductive unit 30 is in proximity with the conductive unit 60 (step S401). When detecting the proximity between the conductive unit 30 and the conductive unit 60, the transmitting electrode(s) of the conductive unit 60 transmits specific data to the receiving electrode(s) of the conductive unit 30 (step S402).

When receiving the specific data, the touch panel device 110 determines whether the specific data corresponds to an application program installed in the touch panel device 110 (step S403). If the specific data does not correspond to the application program, the transmitting electrode(s) of the conductive unit 30 transmits a non-acknowledgement (NACK) to the receiving electrode(s) of the conductive unit 60 (step S404), and the flow might end. In one embodiment, the non-acknowledgement may include an error code indicating the failure cause. On the contrary, if the specific data corresponds to an installed application program, the touch panel device 110 executes the application program to display a GUI on the touch panel 10 for the computing device 120, so as to enable the touch panel 10 to serve as an input unit of the computing device 120 (step S405).

Next, user's inputting data is detected at the touch panel 10 as a touch event and an electrical signal is generated according to the touch event (step S406), and then the transmitting electrode(s) of the conductive unit 30 transmits the electrical signal to the receiving electrode(s) of the conductive unit 60 (step S407). When receiving the electrical signal, the computing device 120 processes the electrical signal to provide a digital signal (step S408), and then determines whether the digital signal meets a predefined criterion (step S409). The following gives a more detailed description of S406. As a user touches a particular part of the GUI of S405 to input something, an analog signal is generated correspondingly because of the capacitance variation around that particular part of the GUI. The processing circuit 20 of the touch panel device 110 processes this analog signal to generate an intermediate signal, usually a signal of digital domain. The intermediate signal may then be processed by the processor 40 so as to be mapped to a digital symbol, which corresponds to the particular part of the GUI of S405. The processing circuit 20 may then process this digital symbol to derive an electrical signal, usually a signal of analog domain; then the electrical signal is transmitted to the computing device 120 via the touch link technology. The conductive unit 60 of the computing device 120 receives this electrical signal and then the processing circuit 70 of the computing device 120 processes the electrical signal to provide a digital signal.

Following step S409, if the digital signal does not meet the predefined criterion, the conductive unit 60 transmits a NACK to the conductive unit 30 (step S410); and the flow might end. In one embodiment, the NACK may include an error code for indicating the cause of the failure. On the contrary, if the digital signal meets the predefined criterion, the computing device 120 executes a plurality of instructions according to the digital signal (step S411), and the flow might end.

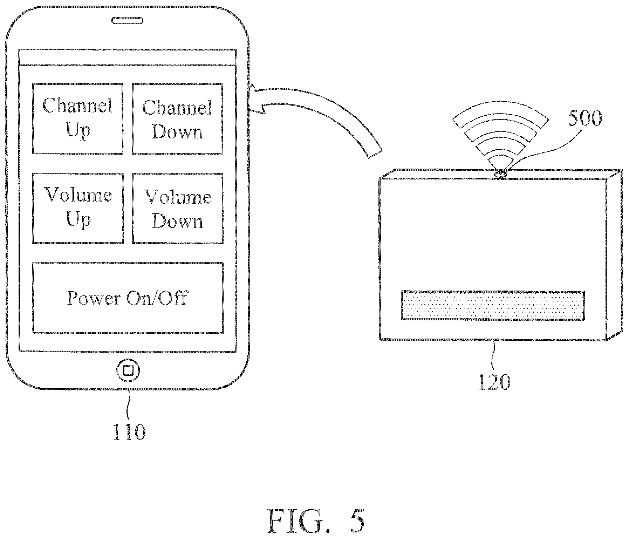

In a first embodiment, the GUI provided in step S405 may be a virtual key pad of a remote controller with a "Channel Up" button, a "Channel Down" button, a "Volume Up" button, a "Volume Down" button, and a "Power On/Off" button, as shown in Fig. 5, and the instructions executed in step S411 may be associated with transmitting infrared (IR) signals according to the digital signal. As shown in Fig. 5, the computing device 120 comprising an IR transmitter 500 may be attached to the back of the touch panel device 110. For example, as a user touches the "Volume Up" button, an analog signal is generated correspondingly because of the capacitance variation around the "Volume Up" button. Then the processing circuit 20 of the touch panel device 110 processes this analog signal to generate an intermediate signal. The intermediate signal may then be processed by the processor 40 so as to be mapped to a digital symbol, which corresponds to the "Volume Up" button. The processing circuit 20 may then process this digital symbol to derive an electrical signal; then the electrical signal is transmitted to the computing device 120 via the touch link technology. The processing circuit 70 of the computing device 120 processes the electrical signal to provide a digital signal. Finally, the IR transmitter 500 transmits an IR signal according to the digital signal. As the digital signal still corresponds to the "Volume Up" button of the touch panel device 110, the IR signal transmitted by IR transmitter 500 dictates that the volume of a terminal device such as a TV turned up.

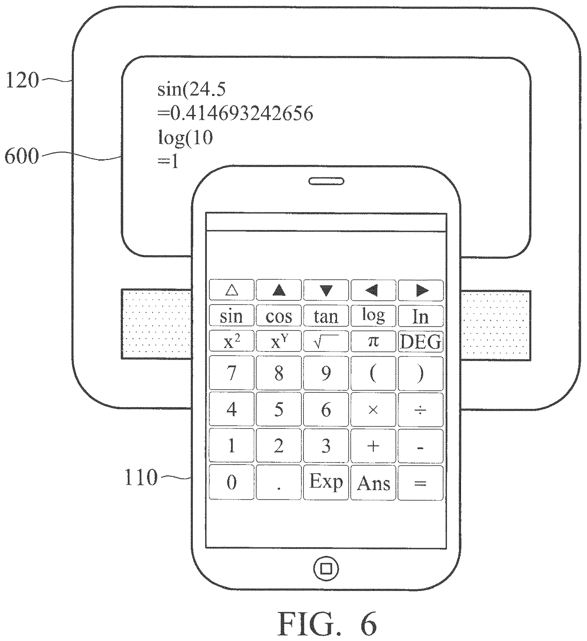

In a second embodiment, the GUI provided in step S405 may be a virtual key pad of a scientific calculator, and the instructions executed in step S411 may be associated with processing the mathematical operations indicated by the user input data and displaying the calculation result on a display screen 600, as shown in Fig. 6. Thus, the loading of the calculation of complicated mathematical operations is eliminated from the touch panel device 110 and is shifted to the computing device 120 whose calculation functionality is expected to be more sophisticated than the touch panel device 110.

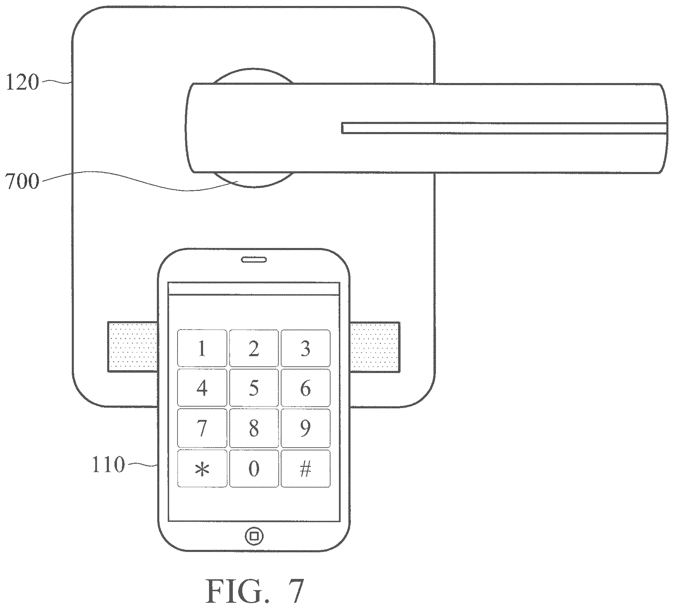

In a third embodiment, the GUI provided in step S405 may be a virtual key pad of a lock unit 700, and the instructions executed in step S411 may be associated with locking the lock unit 700 upon authentication failures and unlocking the lock unit 700 upon successful authentication, as shown in Fig. 7. For example, the lock unit 700 may be installed to a door or a safety box for securing access to a particular space, and may be triggered by the computing device 120 to be moved from a locked position to an opened position when the user input data detected on the touch panel 10 matches with the authentic security code.

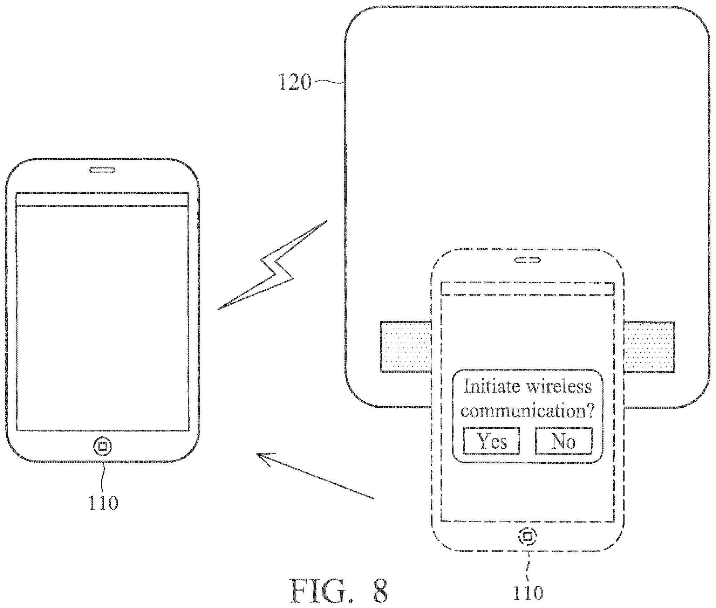

In a fourth embodiment, the GUI provided in step S405 may be a virtual selection menu, and the instructions executed in step S411 may be associated with initiating wireless communication using a wireless technology (e.g., the WiFi technology or the Bluetooth technology) when the selected option indicated by the user input data is "YES", as shown in Fig. 8. Specifically, each of the touch panel device 110 and the computing device 120 comprises a respective wireless communication unit (e.g., a WiFi module or a Bluetooth module) for providing wireless communication functionality using a specific wireless technology. Once the wireless communication has been initiated between the touch panel device 110 and the computing device 120, the wireless communication may continue even if the touch panel device 110 is moved away from the computing device 120, as long as the touch panel device 110 and the computing device 120 are within the signal coverage of the wireless technology in use. For example, when the WiFi technology is in use, the signal coverage generally varies from 20 meters in an area with obstacles (e.g., walls, stairways, or elevators, etc) to 100 meters in an area with a clear line of sight.

While the invention has been described by way of example and in terms of preferred embodiment, it is to be understood that the invention is not limited thereto. Those who are skilled in this technology can still make various alterations and modifications without departing from the scope of this invention.

Use of ordinal terms such as "first" and "second" in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A touch panel device (110), comprising:
a touch panel (10), configured to detect a touch event;
a processing circuit (20), configured to generate an electrical signal according to the touch event; and
a first conductive unit (30), configured to transmit the electrical signal to a second conductive unit (60) of a computing device (120) when the first conductive unit (30) is in proximity with the second conductive unit (60) using touch link technology;
**characterized in that** the touch panel (10) serves as an input unit of the computing device (120) to provide a graphical user interface associated with the computing device (120) for receiving user input data.

2. The touch panel device (110) of claim 1, wherein the first conductive unit (30) comprises a transmitting electrode and a receiving electrode.

3. The touch panel device (110) of claim 1 or claim 2, wherein the first conductive unit is a touch pad.

4. The touch panel device (110) of claim 3, further comprising a processor (40), wherein the processor (40) executes an application program to display said graphical user interface on the touch panel (10), so as to enable the touch panel (10) to serve as the input unit of the computing device (120).

5. A virtual input method executed by a touch panel device (110) comprising a touch panel (10), a processing circuit (20), and a first conductive unit (30), the virtual input method comprising:
detecting, at the touch panel (10), a touch event;
generating, at the processing circuit (20), an electrical signal according to the touch event; and
transmitting, using touch link technology, at the first conductive unit (30), the electrical signal to a second conductive unit (60) of a computing device (120) when the first conductive unit (30) is in proximity with the second conductive unit (60);
**characterized in that** the touch panel (10) serves as an input unit of the computing device (120) to provide a graphical user interface associated with the computing device (120) for receiving user input data.

6. The virtual input method of claim 5, wherein the first conductive unit (30) comprises a transmitting electrode and a receiving electrode.

7. The virtual input method of claim 5 or claim 6, wherein the first conductive unit is a touch pad.

8. The virtual input method of claim 7, further comprising:
executing, at a processor (40) of the touch panel device (110), an application program to display said graphical user interface on the touch panel (10), so as to enable the touch panel (10) to serve as the input unit of the computing device (120).

9. A virtual input system (100), comprising:
a touch panel device (110) of one of claims 1 to 3; and
a computing device (120), the computing device (120) including the second conductive unit (60), configured to receive an electrical signal from the first conductive unit (30) of the touch panel device (110) when the first conductive unit (30) is in proximity with the second conductive unit (60);
a processing circuit (70), configured to process the electrical signal to provide a digital signal; and
a processor (80), configured to execute a plurality of instructions according to the digital signal.

10. The virtual input system (100) of claim 9, wherein the computing device (120) is equipped with the second conductive unit (60) at a part of its front surface.

11. The virtual input system (100) of claim 9 or claim 10, wherein the processor (80) further is configured to determine whether the digital signal meets a predefined criterion before executing the plurality of instructions.

12. The virtual input system (100) of one of claims 9 to 11, further comprising one of the following:
an Infrared (IR) transmitter, transmitting an IR signal to a remote display device according to the digital signal;
a display unit, displaying a video or an image according to the digital signal;
a lock unit, operative to be locked or unlocked according to the digital signal;
a Bluetooth module, transmitting the digital signal to a first electronic device with Bluetooth functionality; and
a Wireless-Fidelity (WiFi) module, transmitting the digital signal to a second electronic device with WiFi functionality.

13. A virtual input method executed by a computing device (120) comprising a first conductive unit (60), a processing circuit (70), and a processor (80), the virtual input method comprising:
receiving, using touch link technology, at the first conductive unit (60), an electrical signal from a second conductive unit (30) of a touch panel device (110) when the first conductive unit (60) is in proximity with the second conductive unit (30);
processing, at the processing circuit (70), the electrical signal to provide a digital signal; and
executing, at the processor (80), a plurality of instructions according to the digital signal;
wherein the electrical signal is generated according to a touch event on a touch panel (10) of the touch panel device (110);
**characterized in that** the touch panel (10) serves as an input unit of the computing device (120) to provide a graphical user interface associated with the computing device (120) for receiving user input data.

14. The method of claim 13, wherein the touch panel device (110) is equipped with the touch panel (10) at its front surface and the second conductive unit (30) at its back surface, while the computing device (120) is equipped with the first conductive unit (30) at a part of its front surface; and wherein the touch panel device (110) is moved to the computing device (120) in a way that the back surface of the touch panel device (110) faces the front surface of the computing device (120), so that the two conductive units (30, 60) are in proximity with each other.

15. The virtual input method of claim 13 or claim 14, further comprising one of the following:
transmitting an Infrared (IR) signal, at an IR transmitter of the computing device (120), to a remote display device according to the digital signal;
displaying, at a display unit of the computing device (120), a video or an image according to the digital signal;
locking or unlocking a lock unit of the computing device (120) according to the digital signal;
transmitting, at a Bluetooth module of the computing device (120), the digital signal to a first electronic device with Bluetooth functionality; and
transmitting, at a Wireless-Fidelity (WiFi) module of the computing device (120), the digital signal to a second electronic device with WiFi functionality.

## Patentansprüche

1. Touch-Panel-Einrichtung (110) umfassend:
ein Touch-Panel (10), das zum Erfassen eines Berührungsereignisses konfiguriert ist;
ein Verarbeitungsschaltkreis (20), der zum Erzeugen eines elektrischen Signals abhängig von dem Berührungsereignis konfiguriert ist; und
eine erste leitende Einheit (30), die dazu konfiguriert ist, das elektrische Signal unter Verwendung von Touch-Link-Technologie zu einer zweiten leitenden Einheit (60) einer Recheneinrichtung (120) zu übertragen, wenn die erste leitende Einheit (30) in der Nähe der zweiten leitenden Einheit (60) ist;
**dadurch gekennzeichnet, dass** das Touch-Panel (10) als Eingabeeinheit der Recheneinrichtung (120) dient, um eine grafische Benutzerschnittstelle, die der Recheneinheit (120) zugeordnet ist, zum Empfangen von Nutzereingabedaten bereitzustellen.

2. Touch-Panel-Einrichtung (110) nach Anspruch 1, wobei die erste leitende Einheit (30) eine Sendeelektrode und eine Empfangselektrode aufweist.

3. Touch-Panel-Einrichtung (110) nach Anspruch 1 oder Anspruch 2, wobei die erste leitende Einheit ein Touch-Pad ist.

4. Touch-Panel-Einrichtung (110) nach Anspruch 3, ferner umfassend einen Prozessor (40), wobei der Prozessor (40) ein Anwendungsprogramm ausführt, um die grafische Benutzerschnittstelle auf dem Touch-Panel (10) anzuzeigen, um es dem Touch-Panel (10) zu ermöglichen, als die Eingabeeinheit der Recheneinrichtung (120) zu dienen.

5. Virtuelles Eingabeverfahren, das von einer Touch-Panel-Einrichtung (110) ausgeführt wird, welche ein Touch-Panel (10), einen Verarbeitungsschaltkreis (20) und eine erste leitende Einheit (30) umfasst, wobei das virtuelle Eingabeverfahren umfasst:
Erfassen eines Berührungsereignisses an dem Touch-Panel (10);
Erzeugen eines elektrischen Signals abhängig von dem Berührungsereignis in dem Verarbeitungsschaltkreis (20); und
Übertragen des elektrischen Signals von der ersten leitenden Einheit (30) zu einer zweiten leitenden Einheit (60) einer Recheneinrichtung (120) mittels Touch-Link-Technologie, wenn die erste leitende Einheit (30) sich in der Nähe der zweiten leitenden Einheit (60) befindet;
**dadurch gekennzeichnet, dass** das Touch-Panel (10) als Eingabeeinheit der Recheneinrichtung (120) dient, um eine grafische Benutzerschnittstelle, die der Recheneinheit (120) zugeordnet ist, zum Empfangen von Benutzerdaten bereitzustellen.

6. Virtuelles Eingabeverfahren nach Anspruch 5, wobei die erste leitende Einheit (50) eine Sendeelektrode und eine Empfangselektrode aufweist.

7. Virtuelles Eingabeverfahren nach Anspruch 5 oder Anspruch 6, wobei die erste leitende Einheit ein Touch-Pad ist.

8. Virtuelles Eingabeverfahren nach Anspruch 7, ferner umfassend:
Ausführen eines Anwendungsprogramms zum Anzeigen der grafischen Benutzerschnittstelle auf dem Touch-Panel (10) durch einen Prozessor (40) der Touch-Panel-Einrichtung (110), um es dem Touch-Panel (10) zu erlauben, als Eingabeeinheit der Recheneinrichtung (120) zu dienen.

9. Virtuelles Eingabesystem (100), umfassend:
eine Touch-Panel-Einrichtung (110) nach einem der Ansprüche 1 bis 3; und
eine Recheneinrichtung (120), wobei die Recheneinrichtung (120) die zweite leitende Einheit (60) umfasst, die dazu konfiguriert ist, ein elektrische Signal von der ersten leitenden Einheit (30) der Touch-Panel-Einrichtung (110) zu empfangen, wenn die erste leitende Einheit (30) sich in der Nähe der zweiten leitenden Einheit (60) befindet;
einen Verarbeitungsschaltkreis (70), der dazu konfiguriert ist, das elektrische Signal zu verarbeiten, um ein digitales Signal vorzusehen; und
einen Prozessor (80), der dazu konfiguriert ist, eine Vielzahl von Befehlen abhängig von dem digitalen Signal auszuführen.

10. Virtuelles Eingabesystem (100) nach Anspruch 9, wobei die Recheneinrichtung (120) mit der zweiten leitenden Einheit (60) als ein Teil ihrer Frontfläche ausgestattet ist.

11. Virtuelles Eingabesystem (100) nach Anspruch 9 oder Anspruch (10), wobei der Prozessor (80) ferner dazu konfiguriert ist, zu ermitteln, ob das digitale Signal ein vorgegebenes Kriterium erfüllt, bevor die mehreren Befehle ausgeführt werden.

12. Virtuelles Eingabesystem (100) nach einem der Ansprüche 9 bis 11, ferner umfassend eines der Folgenden:
einen Infrarot (IR)-Sender, der ein IR-Signal an eine entfernte Anzeigeeinrichtung gemäß dem digitalen Signal überträgt;
eine Anzeigeeinheit, die ein Video oder ein Bild gemäß dem digitalen Signal anzeigt;
eine Sperreinheit, die abhängig von dem digitalen Signal gesperrt oder entsperrt werden kann;
ein Bluetooth-Modul, welches das digitale Signal an eine erste elektronische Einrichtung mittels Bluetooth überträgt; und
ein WiFi-Modul, welches das digitale Signal an eine zweite elektronische Einrichtung mittels WiFi-Funktionalität überträgt.

13. Virtuelles Eingabeverfahren, das auf einer Recheneinrichtung (120) ausgeführt wird, welche eine erste leitenden Einheit (60), einen Verarbeitungsschaltkreis (70) und einen Prozessor (80) umfasst, wobei das virtuelle Eingabeverfahren umfasst:
Empfangen eines elektrischen Signals von einer zweiten leitenden Einheit (30) einer Touch-Panel-Einrichtung (110) an der ersten leitenden Einheit (60) mittels Touch-Link-Technologie, wenn die ersten leitende Einheit (60) sich in der Nähe der zweiten leitenden Einheit (30) befindet;
Verarbeiten des elektrischen Signals in dem Verarbeitungsschaltkreis (70), um ein digitales Signal bereitzustellen; und
Ausführen einer Vielzahl von Befehlen abhängig von dem digitalen Signal in dem Prozessor (80);
wobei das elektrische Signal gemäß einem Berührungsereignis auf einem Touch-Panel (10) der Touch-Panel-Einrichtung (110) erzeugt wird;
**dadurch gekennzeichnet, dass** das Touch-Panel (10) als eine Eingabe-Einheit der Recheneinrichtung (120) dient, um eine grafische Benutzerschnittstelle, welche der Recheneinrichtung (120) zugeordnet ist, zum Empfangen von Eingangsdaten bereitzustellen.

14. Verfahren nach Anspruch 13, wobei die Touch-Panel-Einrichtung (110) mit dem Touch-Panel (10) an ihrer Frontseite und der zweiten leitenden Einheit (30) an ihrer Rückseite ausgestattet ist, während die Recheneinrichtung (120) mit der ersten leitenden Einheit (30) als Teil ihrer Frontseite ausgestattet ist; und wobei die Touch-Panel-Einrichtung (110) zu der Recheneinrichtung (120) derart bewegt wird, dass die Rückseite der Touch-Panel-Einrichtung (110) der Frontseite der Recheneinrichtung (120) zugewandt ist, so dass die beiden leitenden Einheiten (30, 60) einander angenähert werden.

15. Virtuelles Eingabeverfahren nach Anspruch 13 oder Anspruch 14, ferner umfassend eines der Folgenden:
Senden eines Infrarot (IR)-Signals mit einem IR-Sender der Recheneinrichtung (120) zu einer entfernten Anzeigeeinrichtung gemäß dem digitalen Signal;
Anzeigen eines Videos oder eines Bildes gemäß dem digitalen Signal auf der Anzeigeeinheit der Recheneinrichtung (120);
Verriegeln oder Entriegeln einer Verriegelungseinheit der Recheneinrichtung (120) gemäß dem digitalen Signal;
Übertragen des digitalen Signals an eine erste elektronische Einrichtung mit Bluetooth-Funktionalität über ein Bluetooth-Modul der Recheneinrichtung (120); und
Übertragen des digitalen Signals an eine zweite elektronische Einrichtung mittels WiFi-Funktionalität über ein WiFi-Modul der Recheneinrichtung (120).

## Revendications

1. Dispositif d'écran tactile (110), comprenant :
un écran tactile (10), configuré de manière à détecter un événement tactile ;
un circuit de traitement (20), configuré de manière à générer un signal électrique selon l'événement tactile ; et
une première unité conductrice (30), configurée de manière à transmettre le signal électrique à une seconde unité conductrice (60) d'un dispositif informatique (120) lorsque la première unité conductrice (30) est à proximité de la seconde unité conductrice (60), en utilisant une technologie de liaison tactile ;
**caractérisé en ce que** l'écran tactile (10) sert d'unité d'entrée du dispositif informatique (120) pour fournir une interface graphique utilisateur associée au dispositif informatique (120) en vue de recevoir des données d'entrée d'utilisateur.

2. Dispositif d'écran tactile (110) selon la revendication 1, dans lequel la première unité conductrice (30) comprend une électrode de transmission et une électrode de réception.

3. Dispositif d'écran tactile (110) selon la revendication 1 ou 2, dans lequel la première unité conductrice est un pavé tactile.

4. Dispositif d'écran tactile (110) selon la revendication 3, comprenant en outre un processeur (40), dans lequel le processeur (40) exécute un programme d'application pour afficher ladite interface graphique utilisateur sur l'écran tactile (10), de manière à permettre à l'écran tactile (10) de servir d'unité d'entrée du dispositif informatique (120).

5. Procédé d'entrée virtuelle exécuté par un dispositif d'écran tactile (110) comprenant un écran tactile (10), un circuit de traitement (20) et une première unité conductrice (30), le procédé d'entrée virtuelle comprenant les étapes ci-dessous consistant à :
détecter, au niveau de l'écran tactile (10), un événement tactile ;
générer, au niveau du circuit de traitement (20), un signal électrique selon l'événement tactile ; et
transmettre, en utilisant une technologie de liaison tactile, au niveau de la première unité conductrice (30), le signal électrique, à une seconde unité conductrice (60) d'un dispositif informatique (120), lorsque la première unité conductrice (30) est à proximité de la seconde unité conductrice (60) ;
**caractérisé en ce que** l'écran tactile (10) sert d'unité d'entrée du dispositif informatique (120) pour fournir une interface graphique utilisateur associée au dispositif informatique (120) en vue de recevoir des données d'entrée d'utilisateur.

6. Procédé d'entrée virtuelle selon la revendication 5, dans lequel la première unité conductrice (30) comprend une électrode de transmission et une électrode de réception.

7. Procédé d'entrée virtuelle selon la revendication 5 ou 6, dans lequel la première unité conductrice est un pavé tactile.

8. Procédé d'entrée virtuelle selon la revendication 7, comprenant en outre les étapes ci-dessous consistant à :
exécuter, au niveau d'un processeur (40) du dispositif d'écran tactile (110), un programme d'application pour afficher ladite interface graphique utilisateur sur l'écran tactile (10), de manière à permettre à l'écran tactile (10) de servir d'unité d'entrée du dispositif informatique (120).

9. Système d'entrée virtuelle (100), comprenant :
un dispositif d'écran tactile (110) selon l'une quelconque des revendications 1 à 3 ; et
un dispositif informatique (120), le dispositif informatique (120) incluant la seconde unité conductrice (60), configuré de manière à recevoir un signal électrique en provenance de la première unité conductrice (30) du dispositif d'écran tactile (110) lorsque la première unité conductrice (30) est à proximité de la seconde unité conductrice (60) ;
un circuit de traitement (70), configuré de manière à traiter le signal électrique afin de fournir un signal numérique ; et
un processeur (80), configuré de manière à exécuter une pluralité d'instructions selon le signal numérique.

10. Système d'entrée virtuelle (100) selon la revendication 9, dans lequel le dispositif informatique (120) est équipé de la seconde unité conductrice (60) au niveau d'une partie de sa surface avant.

11. Système d'entrée virtuelle (100) selon la revendication 9 ou 10, dans lequel le processeur (80) est en outre configuré de manière à déterminer si le signal numérique satisfait un critère prédéfini, avant d'exécuter la pluralité d'instructions.

12. Système d'entrée virtuelle (100) selon l'une quelconque des revendications 9 à 11, comprenant en outre l'un des éléments suivants :
un émetteur infrarouge (IR), transmettant un signal IR à un dispositif d'affichage distant, selon le signal numérique ;
une unité d'affichage, affichant une vidéo ou une image selon le signal numérique ;
une unité de verrouillage, exploitable de manière à être verrouillée ou déverrouillée selon le signal numérique ;
un module Bluetooth, transmettant le signal numérique à un premier dispositif électronique doté de la fonctionnalité Bluetooth ; et
un module de technologie Wi-Fi, transmettant le signal numérique à un second dispositif électronique doté de la fonctionnalité Wi-Fi.

13. Procédé d'entrée virtuelle exécuté par un dispositif informatique (120) comprenant une première unité conductrice (60), un circuit de traitement (70) et un processeur (80), le procédé d'entrée virtuelle comprenant les étapes ci-dessous consistant à :
recevoir, en utilisant une technologie de liaison tactile, au niveau de la première unité conductrice (60), un signal électrique en provenance d'une seconde unité conductrice (30) d'un dispositif d'écran tactile (110), lorsque la première unité conductrice (60) est à proximité de la seconde unité conductrice (30) ;
traiter, au niveau du circuit de traitement (70), le signal électrique, en vue de fournir un signal numérique ; et
exécuter, au niveau du processeur (80), une pluralité d'instructions selon le signal numérique ;
dans lequel le signal électrique est généré selon un événement tactile sur un écran tactile (10) du dispositif d'écran tactile (110) ;
**caractérisé en ce que** l'écran tactile (10) sert d'unité d'entrée du dispositif informatique (120) pour fournir une interface graphique utilisateur associée au dispositif informatique (120) en vue de recevoir des données d'entrée d'utilisateur.

14. Procédé selon la revendication 13, dans lequel le dispositif d'écran tactile (110) est équipé de l'écran tactile (10) au niveau de sa surface avant, et de la seconde unité conductrice (30) au niveau de sa surface arrière, tandis que le dispositif informatique (120) est équipé de la première unité conductrice (30) au niveau d'une partie de sa surface avant ; et dans lequel le dispositif d'écran tactile (110) est déplacé vers le dispositif informatique (120) d'une manière telle que la surface arrière du dispositif d'écran tactile (110) fait face à la surface avant du dispositif informatique (120), de sorte que les deux unités conductrices (30, 60) sont à proximité l'une de l'autre.

15. Procédé d'entrée virtuelle selon la revendication 13 ou 14, comprenant en outre l'une des étapes ci-dessous consistant à :
transmettre un signal infrarouge (IR), au niveau d'un émetteur IR du dispositif informatique (120), à un dispositif d'affichage distant, selon le signal numérique ;
afficher, au niveau d'une unité d'affichage du dispositif informatique (120), une vidéo ou une image selon le signal numérique ;
verrouiller ou déverrouiller une unité de verrouillage du dispositif informatique (120) selon le signal numérique ;
transmettre, au niveau d'un module Bluetooth du dispositif informatique (120), le signal numérique, à un premier dispositif électronique doté de la fonctionnalité Bluetooth ; et
transmettre, au niveau d'un module de technologie Wi-Fi du dispositif informatique (120), le signal numérique à un second dispositif électronique doté de la fonctionnalité Wi-Fi.
